# EUROPEAN PATENT APPLICATION

(11) **EP 4 201 997 A1**
(43) Date of publication of application: **28.06.2023**
(21) Application number: 21857444.0
(22) Date of filing: 19.07.2021
(51) Int. Cl.: C08L 67/04, C08L 67/02, C08L 23/08, C08L 51/06, C08L 25/14, C08L 75/04, C08K 5/29

(54) **TOUGHENING DEGRADABLE POLYGLYCOLIC ACID COMPOSITION, AND TOUGHENING DEGRADABLE POLYGLYCOLIC ACID MATERIAL AND PREPARATION METHOD THEREFOR AND USE THEREOF**

(30) Priority: 19.08.2020 CN 202010837326
(71) Applicant: China Energy Investment Corporation Limited, Beijing 100011 (CN); National Institute of Clean-and-Low-Carbon Energy, Beijing 102209 (CN)
(72) Inventor: WANG, Rong, Beijing 102209 (CN); SUN, Xiaojie, Beijing 102209 (CN); CHEN, Lanlan, Beijing 102209 (CN); LIANG, Wenbin, Beijing 102209 (CN)
(74) Representative: Kador & Partner Part mbB
(86) International application number: PCT/CN2021/107038
(87) International publication number: WO 2022/037349

(57) **Abstract**

The present invention relates to the field of polyglycolic acid modification. Disclosed are a toughening degradable polyglycolic acid composition, and a toughening degradable polyglycolic acid material and a preparation method therefor and a use thereof. The toughening degradable polyglycolic acid composition comprises polyglycolic acid, a biodegradable polyester and a compatilizer; the biodegradable polyester comprises a biodegradable homopolyester and/or copolyester; and the compatilizer comprises at least one of an epoxy compound, a maleic anhydride grafted polymer, a maleic anhydride polyolefin copolymer and an isocyanate compound. The composition can increase the toughness of a prepared toughening degradable polyglycolic acid material, and a full-biodegradable material having high toughness is obtained.

## Description

### CROSS-REFERENCE TO RELATED APPLICATIONS

This application claims the benefit of China Patent Application 202010837326.5 filed on August 19, 2020, the content of which is incorporated herein by reference.

### TECHNICAL FIELD

The present invention relates to the field of polyglycolic acid modification, in particular to a toughening degradable polyglycolic acid composition, and a toughening degradable polyglycolic acid material and a preparation method therefor and use thereof.

### BACKGROUND

Polyglycolic acid (referred to as PGA) is an aliphatic polyester polymer material with a least unit carbon number, a completely decomposable ester structure and a fastest degradation rate. PGA has the characteristics of being able to adapt to microbial degradation and water degradation. PGA is non-toxic and can be eventually decomposed into water and carbon dioxide, and is recognized worldwide as a material to protect the earth's environment and life. Polyglycolic acid has excellent mechanical properties, the bending strength and tensile strength of polyglycolic acid are higher than those of ordinary resins, and even better than many engineering plastics. Due to the excellent biocompatibility, PGA has been widely used in high value-added products such as medical absorbable surgical sutures, drug controlled release, simulated human tissue materials, biodegradable polymer stents, and the like. However, PGA has the disadvantages of high brittleness and low melt strength, which seriously restricts its processing and application in many fields. Therefore, it is quite important to make toughening modification to PGA and prepare PGA materials with high toughness. However, there is little research on the toughening modification of the PGA at present.

CN102993654A discloses a biodegradable barrier film, which is prepared from the following raw materials in percentage by mass: 0-80wt% biodegradable homopolyester, 0-80wt% biodegradable copolyester, 1-30wt% ethylene-vinyl alcohol copolymer and 0-5wt% additive, wherein the biodegradable homopolyester is obtained by hydroxy fatty acid monomers via a condensation reaction or ring-opening polymerization reaction; and the biodegradable copolyester is obtained by dibasic acid monomers and fatty diols via a polymerization reaction. The invention aims at overcoming the defect that a biodegradable film has no barrier property. The invention does not involve toughening and compatibilizing.

CN107083032A discloses a method for preparing a biodegradable polylactic acid based composite material with high strength and high toughness by a crosslinking reaction in an extrusion process. The biodegradable polylactic acid based composite material comprises the following components in parts by mass: 60-100 parts of polylactic acid, 5-60 parts of biodegradable polyester, and 3-20 parts of polymeric polyol or polymeric polyol ether cross-linking agent. The biodegradable polylactic acid based composite material is prepared by a melt blending-extrusion method, and comprises the following specific steps of: (1) uniformly mixing dried polylactic acid resin, biodegradable polyester and polymeric polyol or polymeric polyol ether cross-linking agent; and (2) adding the mixture obtained in the step (1) into a twin-screw extruder for melt blending reaction and extrusion. The invention aims at solving a problem that compatibility and strength of polylactic acid materials decrease due to the addition of flexible polyester in the preparation of polylactic acid based composite materials. The invention mainly involves cross-linking with polymeric polyol and polymeric polyol ether, which mainly improves the strength, but does not increase the toughness significantly.

CN107987494A discloses a biodegradable polyethylene glycol terephthalate blend, comprises the following components in parts by weight: 50-70 parts of polyethylene glycol terephthalate, 10-40 parts of polyglycolic acid, 5-10 parts of compatilizer, 0.1-0.5 parts of antioxidant and 1-2 parts of hydrolysis resistant agent. However, the invention only involves adding polyglycolic acid to improve the degradation property of PET, and the toughness of the material is not necessarily improved. Moreover, the PET itself is not biodegradable, which may affect total biodegradability of the whole material.

For now, polyglycolic acid materials still need to solve the problems of material toughening and compatibility improvement, it is necessary to develop degradable materials with high toughness.

### SUMMARY

The object of the present invention is to overcome the problems of poor toughness, low melt strength and poor processability of an existing polyglycolic acid material, as well as the problem of adding non-degradable resin in modification to destroy the degradation of the material, and to provide a toughening degradable polyglycolic acid composition, a toughening degradable polyglycolic acid material and a preparation method therefor and use thereof.

To implement the foregoing object, a first aspect of the present invention provides a toughening degradable polyglycolic acid composition, comprising a polyglycolic acid, a biodegradable polyester and a compatilizer. The biodegradable polyester comprises a biodegradable homopolyester and/or copolyester; and the compatilizer comprises at least one of an epoxy compound, a maleic anhydride grafted polymer, a maleic anhydride polyolefin copolymer and an isocyanate compound.

A second aspect of the present invention provides a preparation method for a toughening degradable polyglycolic acid material, comprising: melt-extruding the composition of the present invention to obtain the toughening degradable polyglycolic acid material.

A third aspect of the present invention provides a toughening degradable polyglycolic acid material prepared by the preparation method of the present invention.

A fourth aspect of the present invention provides use of the material provided by the present invention above in injection molding, blister molding and blow molding.

According to the technical solution above, in the composition provided by the present invention, the compatilizer can chemically react with PGA and other degradable esters to form a network structure, increase the compatibility of two phases, reduce the phase dispersion size of degradable esters in PGA, and even form a microfiber continuous phase structure, thus greatly increasing the toughness of the prepared composite material and obtaining a full-biodegradable material having high toughness. Further, the melt viscosity and the melting index of the composition are adjusted, which improves the processability of the PGA material and expands the application field of the PGA material.

### DESCRIPTION OF THE DRAWINGS

FIG. 1 is an infrared spectrum of raw materials PGA, PBAT and MDI, and a toughening degradable polyglycolic acid material obtained in Example 1 of the present invention;
FIG. 2 is a SEM graph of a polyglycolic acid material prepared in Comparative Example 4;
FIG. 3 is a SEM graph of a toughening degradable polyglycolic acid material prepared in Example 6; and
FIG. 4 is a complex viscosity-frequency diagram of a polyglycolic acid material prepared in Comparative Example 4 and a toughening degradable polyglycolic acid material prepared in Example 6.

### EMBODIMENT

The endpoints and any values of the ranges disclosed herein are not limited to the precise ranges or values, and these ranges or values should be understood to include values close to these ranges or values. For numerical ranges, the endpoint values of each range, the endpoint values of each range and the individual point values, and the individual point values can be combined with each other to obtain one or more new numerical ranges, which should be regarded as specifically disclosed herein.

A first aspect of the present invention provides a toughening degradable polyglycolic acid composition, comprising a polyglycolic acid, a biodegradable polyester and a compatilizer. The biodegradable polyester comprises a biodegradable homopolyester and/or copolyester; and the compatilizer comprises at least one of an epoxy compound, a maleic anhydride grafted polymer, a maleic anhydride polyolefin copolymer and an isocyanate compound.

In some embodiments of the present invention, the biodegradable polyester can be used to improve the toughness and processability of the obtained polyglycolic acid material. When a specific biodegradable polyester is selected, the biodegradable polyester can be matched with polyglycolic acid, which can not only realize the complete degradability of the prepared material, but also not destroy the material properties of the polyglycolic acid. Preferably, the biodegradable polyester comprises at least one of poly(butylene adipate-co-terephthalate), polycaprolactone, poly (butylene succinate), polylactic acid, polyhydroxybutyrate and polyhydroxyalkanoates. More preferably, poly(butylene adipate-co-terephthalate) (PBAT) can have the properties of high toughness, biodegradability and high thermal stability. The PBAT can be commercially available, such as Ecoflex F blend C1200 from BASF. The polycaprolactone can be soft and have high extensibility, and can provide a plasticizing effect. The polycaprolactone can be commercially available, such as the 6800 from Solvay, the USA.

Furthermore, in some embodiments of the present invention, a weight ratio of the biodegradable polyester to the compatilizer is 2-40: 1, and preferably 6-30: 1. When the weight ratio of the biodegradable polyester to the compatilizer is not within the above range, the compatibility with the polyglycolic acid will be affected, which is not conducive to improving the toughness of the polyglycolic acid, and the melt strength and processability of the material will be affected.

In some embodiments of the present invention, the usage amount of each component of the composition satisfies the following relationship: the polyglycolic acid is 20-90 parts by weight, the biodegradable polyester is 10-80 parts by weight, and the compatilizer is 0.2-10 parts by weight. The composition can be further made into a polyglycolic acid material with high toughness and improved processability.

In some embodiments of the present invention, preferably, the polyglycolic acid is 30-70 parts by weight, the biodegradable polyester is 30-70 parts by weight, and the compatilizer is 0.5-5 parts by weight.

In some embodiments of the present invention, preferably, a melting index of the polyglycolic acid at 240°C and a load of 2.16 kg is 2-100 g/10min, and preferably 20-85 g/10min. Preferably, a weight-average molecular weight of the polyglycolic acid is 50,000-300,000, and preferably 90,000-250,000. Selecting the polyglycolic acid with such property parameter(s) can provide sufficient mechanical strength and good processability. The polyglycolic acid can be commercially available, such as a polyglycolic acid from Shanghai Pujing Chemical Industry Co., Ltd.

In some embodiments of the present invention, preferably, melting indexes of the polyglycolic acid and the composition at 240°C and a load of 2.16 kg are respectively MFR1 and MFR2; wherein, MFR2≤60%×MFR1, and preferably, MFR2 is (10-40%)×MFR1. When the melting indexes between the polyglycolic acid and the composition satisfy the above relationship, the melting strength and the processability can be improved.

In some embodiments of the present invention, preferably, a melt viscosity of the composition is 1,000-30,000 Pa·s. In the present invention, the melt viscosity of the composition is measured by a rotational rheometer. The measurement is carried out at 240°C, 2% strain and a frequency of 0.05 rad/s. Therefore, the composition provided by the present invention can have better processability.

In the present invention, the polyglycolic acid and the composition satisfy the above relationship(s), which can provide an action or effect of improving the melting strength and the processability.

In some embodiments of the present invention, the compatilizer can provide a reaction with a chain-end hydroxyl group to obtain the technical effect of increasing compatibility and melt strength. Preferably, the epoxy compound comprises, but is not limited to a copolymer containing glycidyl methacrylate (GMA) group, preferably the GMA content is 0.5%-20% by weight. Preferably, the epoxy compound is selected from at least one of styrene-acrylonitrile-(glycidyl methacrylate) copolymer, ethylene-(methyl acrylate)-(glycidyl methacrylate) copolymer, ethylene-(ethyl acrylate)-(glycidyl methacrylate) copolymer, (POE elastomer)-(glycidyl methacrylate) copolymer and styrene-methacrylate-(glycidyl methacrylate) copolymer. In the composition, the epoxy compound can react with two components to form a crosslinking action or effect. The epoxy compound can be commercially available, such as ADR-4468 (the GMA content is 10% by weight, and the weight-average molecular weight is about 6,680) from BASF.

In some embodiments of the present invention, preferably, the maleic anhydride grafted polymer is selected from at least one of ethylene-(maleic anhydride grafted) copolymer, (POE elastomer)-(maleic anhydride grafted) copolymer and propylene-(maleic anhydride grafted) copolymer. Preferably, a grafting ratio of the maleic anhydride grafted polymer is 0.2-5% by weight. A weight-average molecular weight of the maleic anhydride grafted polymer is 20,000-150,000. The maleic anhydride grafted polymer can be commercially available, such as Fine-Blend GR216 (with a grafting ratio of 0.5%-1.0% by weight). By selecting a maleic anhydride grafted polymer that meets the above performance parameter(s), it is beneficial to provide a toughening degradable polyglycolic acid material further obtained by the composition with high toughness.

In some embodiments of the present invention, preferably, the maleic anhydride polyolefin copolymer has a structure as shown by formula 1: 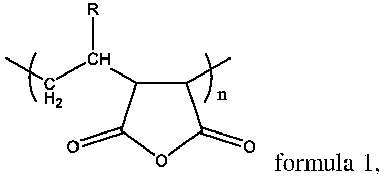 wherein R is H, C₁-C₆ alkyl, phenyl or C₁-C₆ alkoxy, and n is an integer of 2 and above, such as SMA1000 from Yushuo New Material Technology Co., Ltd., wherein R is phenyl, n is 27, and the weight-average molecular weight M_{w} is about 5,500.

In some embodiments of the present invention, preferably, the isocyanate compound is selected from at least one of toluene-2,4-diisocyanate, hexamethylene diisocyanate, isophorone diisocyanate, diphenylmethane diisocyanate, lysine diisocyanate and polyisocyanate. The isocyanate compound can react with the components in the composition, resulting in an action or effect of increasing melt strength and system compatibility. The polyisocyanate has a viscosity (25°C) of 150-250 mPa·s, and a functionality of 2.6-2.7. The polyisocyanate can be commercially available, for example, PM200 (viscosity at 25°C of 150-250 mPa·s, -NCO content of 30.2-32% by weight, and functionality of 2.6-2.7) produced by Wanhua Chemical.

Further preferably, the compatilizer is an epoxy compound and/or an isocyanate compound.

A second aspect of the present invention provides a preparation method for a toughening degradable polyglycolic acid material, comprising: melt-extruding the composition of the present invention to obtain a toughening degradable polyglycolic acid material.

In a specific embodiment provided by the present invention, the preparation method may comprise:
1) weighing polyglycolic acid and biodegradable esters according to the formulation, and drying the mixture in a vacuum oven at a drying temperature of 50-80°C for 4-10 hours to remove water;
2) mixing the dried polyglycolic acid, degradable polyester and compatilizer uniformly according to the formulation; and
3) adding the mixture obtained in the step 2) into a twin-screw extruder for melt blending reaction and extrusion.

In some specific embodiments of the present invention, preferably, conditions for the melt-extruding comprise: a temperature of 220-245°C, preferably 230-240°C; a time of 4-10 minutes, preferably 5-8 minutes; and an extruder rotating speed of 60-110 rpm, preferably 80-100 rpm.

In the present invention, the inventors have studied the conditions of melt blending, and found that when the toughening degradable polyglycolic acid composition is melt-blended under the above conditions, the degradation of the polyglycolic acid in the extrusion process can be avoided, and the deterioration of the properties of the prepared polyglycolic acid composition can be avoided.

A third aspect of the present invention provides a toughening degradable polyglycolic acid material prepared by the preparation method of the present invention.

The toughening degradable polyglycolic acid material prepared according to the present invention can have improved properties. In some preferred embodiments, the toughening degradable polyglycolic acid material has a notched impact strength of 5 kJ/m² and above, and an elongation at break of 80% and above.

Compared with the polyglycolic acid, the toughening degradable polyglycolic acid material provided by the present invention is additionally provided with the biodegradable polyester and the compatilizer, while achieving toughening, the melt strength of the system can be increased and the processability can be improved. Preferably, a complex viscosity of the toughening degradable polyglycolic acid material is 1,000-30,000 Pa·s, preferably 2,000-20,000 under the conditions of 240°C, 2% strain and a frequency of 0.05 rad/s.

A fourth aspect of the present invention provides use of the material provided by the present invention above in injection molding, blister molding and blow molding, for example, use in preparing films, fibers and plates.

The present invention is described in detail hereinafter through examples. In the following examples:
The prepared toughening degradable polyglycolic acid material was observed by SEM. A Nova NanoSEM 450 was used. A brittle fracture was subjected to the sample after freezing. After carbon spraying on the fracture surface, dispersion and particle morphology of each component in the material were observed, and a magnification factor was 10,000 times.

A melting index was measured by GB/T 3682-2000 method.

A complex viscosity was measured by using rotational rheological frequency scanning (240°C, 2% strain, and a frequency of 0.05-100 rad/s) method.

A notched impact strength of the samples was measured according to GB/T 1043-2008, wherein at least five samples were tested and an average value was taken.

A tensile property of small sample bars obtained by injection molding was measured according to GB/T 16421-1996, wherein at least five samples were tested and an average value was taken.

Polyglycolic acid (PGA) was purchased from Shanghai Pujing Chemical Industry Co., Ltd.; PGA-1 (with a melting index of 64.0 g/10 min, and a weight-average molecular weight of 150,000); PGA-2 (with a melting index of 85.0 g/10 min, and a weight-average molecular weight of 90,000); and PGA-3 (with a melting index of 45.0 g/10 min, and a weight-average molecular weight of 200,000).

Biodegradable polyester PBAT, BASF Ecoflex F blend C1200.

Maleic anhydride polyolefin copolymer: SMA1000 (R was phenyl, n was 27, and the weight-average molecular weight M_{w} was about 5,500) from Yushuo New Material Technology Co., Ltd.

MDI, purchased from Innochem.

Polyisocyanate (PMDI), PM200 (viscosity at 25°C of 150-250 mPa·s, -NCO content of 30.2-32% by weight, and functionality of 2.6-2.7) produced by Wanhua Chemical.

Epoxy compound: ADR-4468 (the GMA content was 10% by weight, and the weight-average molecular weight was about 6,680) from BASF.

### Example 1

70 parts by weight of polyglycolic acid PGA-1, 30 parts by weight of PBAT and 5 parts by weight of MDI were evenly mixed, then melt-blended at 240°C for 6 minutes by a twin-screw extruder, the extruder rotating speed was 100 rpm, extruded and pelletized to obtain a toughening degradable polyglycolic acid material.

A formulation of the composition and test results were shown in Table 1.

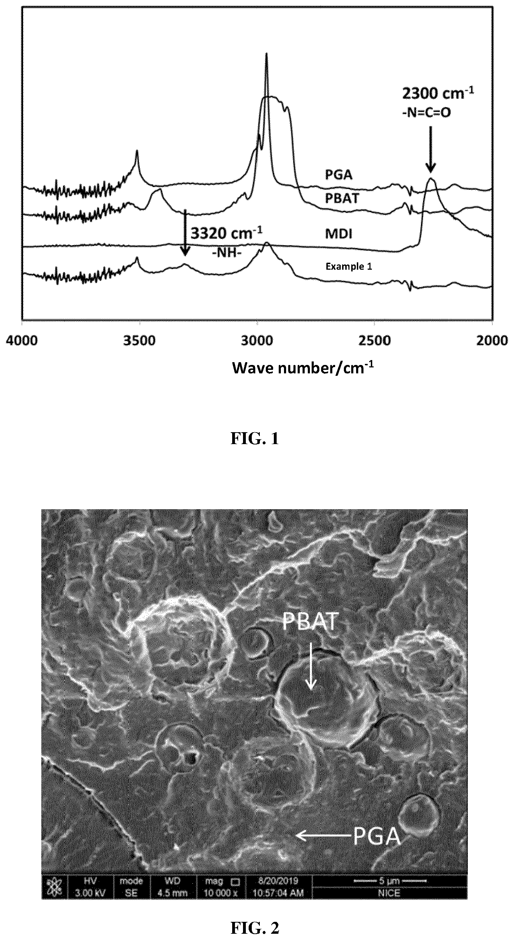

Raw materials PGA, PBAT and MDI, and the toughening degradable polyglycolic acid material obtained in Example 1 were tested by infrared spectrum, and the spectrogram results in FIG. 1 were obtained. It could be seen from the figure that a characteristic peak of -N=C=O at 2,300 cm⁻¹ disappeared, which belongs to MDI in the PGA/PBAT/MDI blend, and a new -NH-located at 3,320 cm⁻¹ was generated, which was a product of a reaction between -OH and -N=C=O, indicating that MDI could react with -OH at a chain end of PGA and PBAT to form a cross-linked network structure.

### Example 2

50 parts by weight of polyglycolic acid PGA-1, 50 parts by weight of PBAT and 2 parts by weight of MDI were evenly mixed, then melt-blended at 235°C for 8 minutes by a twin-screw extruder, the extruder rotating speed was 80 rpm, extruded and pelletized to obtain a toughening degradable polyglycolic acid material.

A formulation of the composition and test results were shown in Table 1.

### Example 3

40 parts by weight of polyglycolic acid PGA-1, 60 parts by weight of PBAT and 5 parts by weight of MDI were evenly mixed, then melt-blended at 230°C for 5 minutes by a twin-screw extruder, the extruder rotating speed was 90 rpm, extruded and pelletized to obtain a toughening degradable polyglycolic acid material.

A formulation of the composition and test results were shown in Table 1.

### Example 4

30 parts by weight of polyglycolic acid PGA-1, 70 parts by weight of PBAT and 5 parts by weight of compatilizer (MDI) were evenly mixed, then melt-blended at 240°C for 6 minutes by a twin-screw extruder, the extruder rotating speed was 100 rpm, extruded and pelletized to obtain a toughening degradable polyglycolic acid material.

A formulation of the composition and test results were shown in Table 1.

### Example 5

50 parts by weight of polyglycolic acid PGA-1, 50 parts by weight of PBAT and 5 parts by weight of compatilizer (ADR-4468) were evenly mixed, then melt-blended at 240°C for 6 minutes by a twin-screw extruder, the extruder rotating speed was 100 rpm, extruded and pelletized to obtain a toughening degradable polyglycolic acid material.

A formulation of the composition and test results were shown in Table 1.

### Example 6

50 parts by weight of polyglycolic acid PGA-1, 50 parts by weight of PBAT and 5 parts by weight of PMDI were evenly mixed, then melt-blended at 240°C for 6 minutes by a twin-screw extruder, the extruder rotating speed was 100 rpm, extruded and pelletized to obtain a toughening degradable polyglycolic acid material.

A formulation of the composition and test results were shown in Table 1.

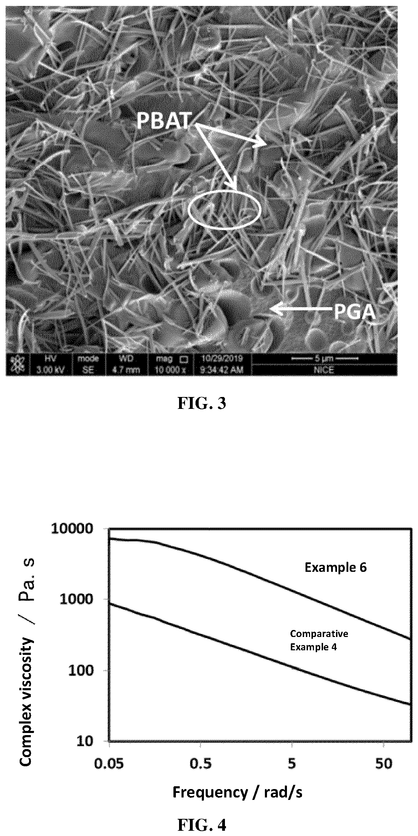

The toughening degradable polyglycolic acid material obtained in Example 6 was observed by SEM, and a SEM graph shown in FIG. 3 was obtained. It could be seen that after adding the reactive compatibilizer MDI, the PGA-2 and the PBAT could react with each other, increasing the compatibility of two phases, and even forming a continuous phase structure of microfibers.

### Example 7

50 parts by weight of polyglycolic acid PGA-1, 50 parts by weight of PBAT and 5 parts by weight of compatilizer (SMA1000) were evenly mixed, then melt-blended at 240°C for 6 minutes by a twin-screw extruder, the extruder rotating speed was 100 rpm, extruded and pelletized to obtain a toughening degradable polyglycolic acid material.

### Example 8

50 parts by weight of polyglycolic acid PGA-2, 50 parts by weight of PBAT and 5 parts by weight of MDI were evenly mixed, then melt-blended at 240°C for 6 minutes by a twin-screw extruder, the extruder rotating speed was 100 rpm, extruded and pelletized to obtain a toughening degradable polyglycolic acid material.

A formulation of the composition and test results were shown in Table 1.

### Example 9

50 parts by weight of polyglycolic acid PGA-3, 50 parts by weight of PBAT and 5 parts by weight of MDI were evenly mixed, then melt-blended at 240°C for 6 minutes by a twin-screw extruder, the extruder rotating speed was 100 rpm, extruded and pelletized to obtain a toughening degradable polyglycolic acid material.

A formulation of the composition and test results were shown in Table 1.

### Comparative Example 1

100 parts by weight of polyglycolic acid PGA-1 were melt-extruded and pelletized by a twin-screw extruder at 240°C for 6 minutes, the extruder rotating speed was 100 rpm. Test results were shown in Table 1.

### Comparative Example 2

100 parts by weight of polyglycolic acid PGA-1 and 5 parts by weight of MDI were evenly mixed, then melt-blended at 240°C for 6 minutes by a twin-screw extruder, the extruder rotating speed was 100 rpm, extruded and pelletized.

### Comparative Example 3

70 parts by weight of polyglycolic acid PGA-1 and 30 parts by weight of PBAT were evenly mixed, then melt-blended at 240°C for 6 minutes by a twin-screw extruder, the extruder rotating speed was 100 rpm, extruded and pelletized. A formulation of the composition and test results were shown in Table 1.

### Comparative Example 4

50 parts by weight of polyglycolic acid PGA-1 and 50 parts by weight of PBAT were evenly mixed, then melt-blended at 240°C for 6 minutes by a twin-screw extruder, the extruder rotating speed was 100 rpm, extruded and pelletized. A formulation of the composition and test results were shown in Table 1.

The polyglycolic acid material obtained in Comparative Example 4 was observed by SEM, and a SEM graph shown in FIG. 2 was obtained. It could be seen that in Comparative Example 4, since no compatilizer was added, the compatibility of two phases was poor, and there was an obvious phase-separation structure.

The viscosities of the polyglycolic acid material prepared in Comparative Example 4 and the toughening degradable polyglycolic acid material prepared in Example 6 were measured, and a rheological complex viscosity-frequency diagram shown in FIG. 4 was obtained. It could be seen that after adding the reactive compatibilizer MDI, the PGA and the PBAT could react with each other, the molecular chain grew, the entanglement between molecular chains increased, and the melt viscosity obviously increased.

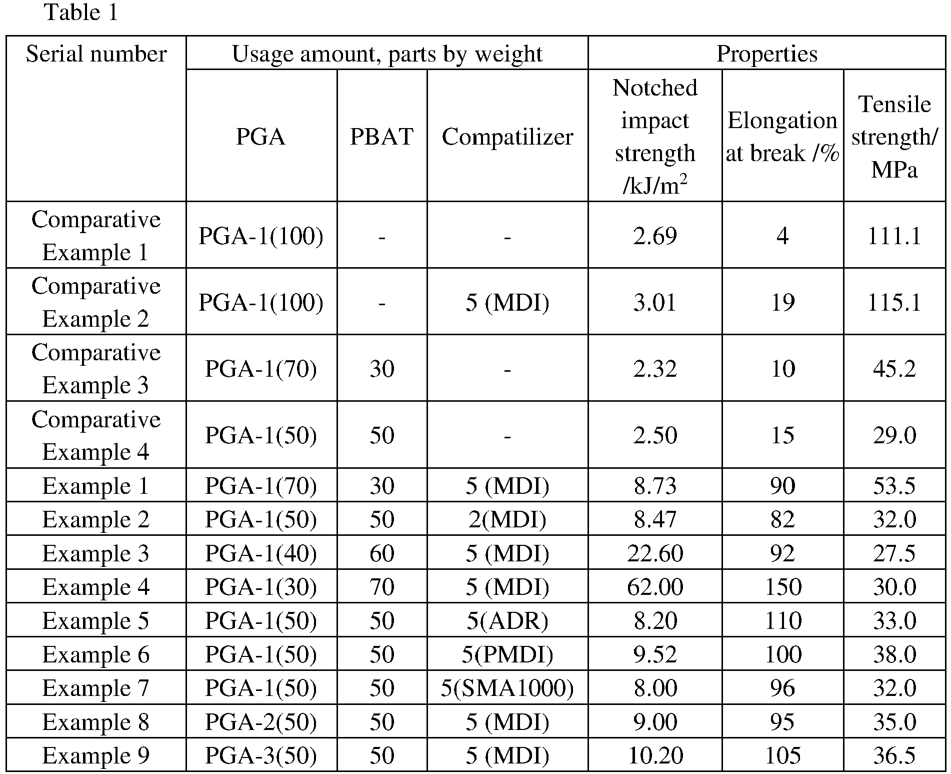

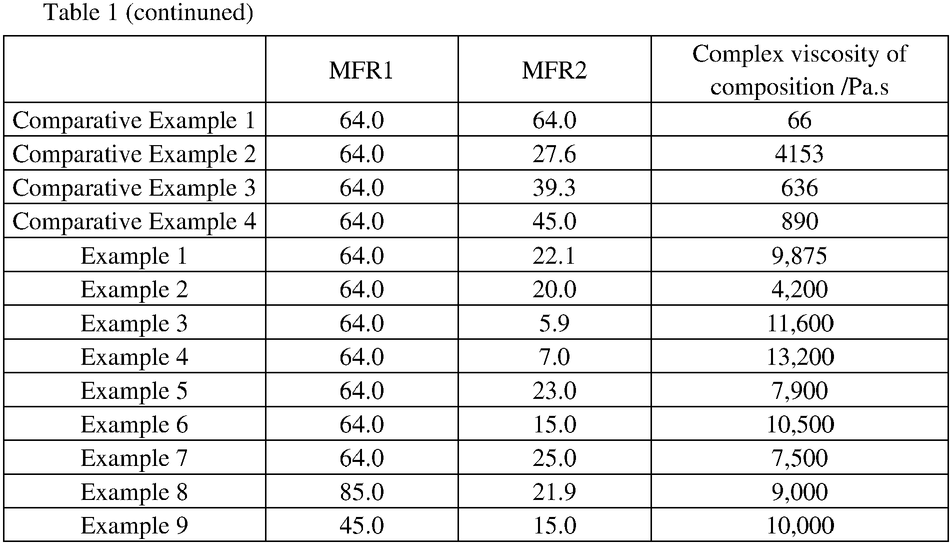

It can be seen from the results of the examples, comparative examples and Table 1, by using the composition provided by the present invention, the toughening degradable polyglycolic acid material prepared under the toughen-modifying of the biodegradable resin and the compatilizer can have higher notched impact strength, elongation at break and tensile strength. For example, comparing Example 1 with Comparative Example 3, and comparing Examples 2, 5-9 with Comparative Example 4, the composition has improved melt strength and better processability, and the toughness and tensile properties of the prepared materials are obviously better. The technical effects obtained by Examples 3 and 4 are also better than those of the comparative examples. The toughness and tensile properties of the materials provided by Comparative Examples 1 and 2 are worse than those of the toughening degradable polyglycolic acid material provided by the present invention.

Those described above are merely preferred embodiments of the present invention, but are not intended to limit the present invention. Within the scope of the technical concept of the present invention, many simple modifications can be made to the technical solutions of the present invention, comprising the combination of various technical features in any other suitable way. These simple modifications and combinations shall also be regarded as the contents disclosed by the present invention and belong to the protection scope of the present invention.

## Claims

1. A toughening degradable polyglycolic acid composition, comprising: a polyglycolic acid, a biodegradable polyester and a compatilizer; the biodegradable polyester comprising a biodegradable homopolyester and/or copolyester; and the compatilizer comprising at least one of an epoxy compound, a maleic anhydride grafted polymer, a maleic anhydride polyolefin copolymer and an isocyanate compound.

2. The composition according to claim 1, wherein in the composition, the polyglycolic acid is 20-90 parts by weight, the biodegradable polyester is 10-80 parts by weight, and the compatilizer is 0.2-10 parts by weight; and
preferably, the polyglycolic acid is 30-70 parts by weight, the biodegradable polyester is 30-70 parts by weight, and the compatilizer is 0.5-5 parts by weight.

3. The composition according to claim 1 or 2, wherein a melting index of the polyglycolic acid at 240°C and a load of 2.16 kg is 2-100 g/10min, and preferably 20-85 g/10min.

4. The composition according to any one of claims 1 to 3, wherein melting indexes of the polyglycolic acid and the composition at 240°C and a load of 2.16 kg are respectively MFR1 and MFR2; and MFR2≤60%×MFR1, and preferably, MFR2 is (10-40%)×MFR1; and
preferably, a complex viscosity of the composition at 240°C is 1,000-30,000 Pa·s.

5. The composition according to any one of claims 1 to 4, wherein the biodegradable polyester comprises at least one of poly(butylene adipate-co-terephthalate), polycaprolactone, poly (butylene succinate), polylactic acid, polyhydroxybutyrate and polyhydroxyalkanoates; and
preferably, a weight ratio of the biodegradable polyester to the compatilizer is 2-40: 1, and preferably 6-30: 1.

6. The composition according to any one of claims 1 to 5, wherein the epoxy compound comprises a copolymer containing glycidyl methacrylate group, and preferably, the epoxy compound is selected from at least one of styrene-acrylonitrile-(glycidyl methacrylate) copolymer, ethylene-(methyl acrylate)-(glycidyl methacrylate) copolymer, ethylene-(ethyl acrylate)-(glycidyl methacrylate) copolymer, (POE elastomer)-(glycidyl methacrylate) copolymer, and styrene-methacrylate-(glycidyl methacrylate) copolymer;
preferably, the maleic anhydride grafted polymer is selected from at least one of ethylene-(maleic anhydride grafted) copolymer, (POE elastomer)-(maleic anhydride grafted) copolymer and propylene-(maleic anhydride grafted) copolymer; and preferably, a grafting ratio of the maleic anhydride grafted polymer is 0.2-5% by weight;
preferably, the maleic anhydride polyolefin copolymer has a structure as shown by formula 1: 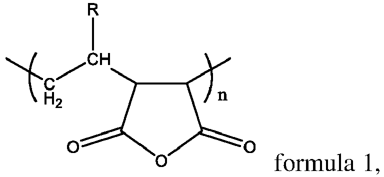 wherein R is H, C₁-C₆ alkyl, phenyl or C₁-C₆ alkoxy, and n is an integer of 2 and above; and
preferably, the isocyanate compound is selected from at least one of toluene-2,4-diisocyanate, hexamethylene diisocyanate, isophorone diisocyanate, diphenylmethane diisocyanate, lysine diisocyanate and polyisocyanate.

7. A preparation method for a toughening degradable polyglycolic acid material, comprising:
melt-extruding the composition according to any one of claims 1-6 to obtain a toughening degradable polyglycolic acid material;
preferably, conditions for the melt-extruding comprise: a temperature of 220-245°C, preferably 230-240°C; a time of 4-10 minutes, preferably 5-8 minutes; and an extruder rotating speed of 60-110 rpm, preferably 80-100 rpm.

8. A toughening degradable polyglycolic acid material prepared by the preparation method according to claim 7.

9. The material according to claim 8, wherein the toughening degradable polyglycolic acid material has a notched impact strength of 5 kJ/m² and above, and an elongation at break of 80% and above.

10. Use of the material according to claim 8 or 9 in injection molding, blister molding and blow molding.
